Europäisches Patentamt

**European Patent Office**

**Office européen des brevets**

(19)

(11) Numéro de publication: **0 159 925**
**A1**

(12) # DEMANDE DE BREVET EUROPEEN

(21) Numéro de dépôt: **85400441.3**

(22) Date de dépôt: **07.03.85**

(51) Int. Cl.⁴: **B 60 K 17/34**

(30) Priorité: **16.03.84 FR 8404133**

(43) Date de publication de la demande: **30.10.85**
**Bulletin 85/44**

(84) Etats contractants désignés: **DE GB IT SE**

(71) Demandeur: **AUTOMOBILES DANGEL Société dite:, 5, Rue du Canal, F-68780 Sentheim (FR)**

(72) Inventeur: **Dangel, Henry, 5 Rue du Sillon, F-68100 Mulhouse (FR)**

(74) Mandataire: **Moncheny, Michel et al, c/o Cabinet Lavoix 2 Place d'Estienne d'Orves, F-75441 Paris Cedex 09 (FR)**

(54) **Dispositif de transmission pour véhicule à quatre roues motrices.**

(57) Ce dispositif est utilisable en particulier sur un véhicule à groupe motopropulseur transversal et peut être aisément adapté pour transformer un véhicule à traction avant en véhicule à quatre roues motrices.

Il comprend un différentiel central (D₁) entraîné à partir de l'organe de sortie (11) d'une boîte de vitesses, par l'intermédiaire d'un corps creux (32) dans lequel est logé le différentiel (D₂) associé aux roues avant. Les deux sorties du différentiel central (D₁) attaquent respectivement les deux autres différentiels (D₂) et (D₃) associés aux roues avant et aux roues arrière. L'agencement des deux différentiels (D₁, D₂) est particulièrement compact et le carter d'origine (21) du différentiel peut être conservé.

Dispositif de transmission pour véhicule à quatre roues motrices.-

La présente invention concerne un dispositif de transmission à trois différentiels pour véhicule à quatre roues motrices et notamment pour véhicule à groupe moto-propulseur disposé transversalement, c'est-à-dire perpendiculairement à la direction longitudinale du véhicule.

On a décrit, dans la demande de brevet français FR-82 08 440 déposée le 14 Mai 1982, un dispositif de transmission comprenant un premier différentiel dont l'organe d'entrée est entraîné à partir de l'arbre de sortie de la boîte de vitesses et dont les deux organes de sortie sont reliés respectivement à l'une des roues avant et à l'organe d'entrée d'un deuxième différentiel dont les deux organes de sortie sont reliés respectivement à la deuxième roue avant et à un arbre de transmission lui-même relié à un différentiel associé aux roues arrière.

Une telle disposition est intéressante, mais peut dans certains cas présenter un inconvénient, dans la mesure où les deux roues avant ne sont pas entraînées à partir du même différentiel, ce qui peut provoquer une certaine dissymétrie dans leur entraînement.

On connaît, par ailleurs, des agencements dans lesquels un différentiel central a ses deux organes de sortie reliés, respectivement aux deux autres différentiels, le différentiel central ($D_1$, $D'_1$) et le différentiel ($D_2$) associé aux roues avant étant disposés coaxialement à peu près entre les deux roues avant, de sorte que ce différentiel central est traversé par l'un des arbres de transmission entraînés par le différentiel ($D_2$). Dans de tels agencements connus (GB-A- 2074 517 - JP-A- 58/63523) la disposition est telle que l'on aboutit à un encombrement important et que l'adaptation d'un véhicule de série est difficile.

Le but de cette invention est de proposer un dispositif de transmission pour véhicule à quatre roues motrices, du type comprenant trois différentiels, et dans lequel les roues de chaque train soient entraînées à partir d'un même différentiel, ce dispositif devant cependant conserver un encombrement très faible et n'entraîner que peu de modifications par rapport à un véhicule de série.

Ce dispositif doit, en particulier, permettre l'adaptation aisée d'un véhicule de série à groupe motopropulseur transversal et à roues avant motrices, en un véhicule à quatre roues motrices.

L'invention a ainsi pour objet un dispositif de transmission pour véhicule à groupe motopropulseur transversal et à quatre roues motrices, comprenant trois différentiels : un différentiel central, un différentiel associé aux roues avant et un différentiel associé aux roues arrière; le différentiel central ayant un organe d'entrée entraîné par l'arbre de sortie du groupe motopropulseur et deux organes de sortie agencés pour entraîner, respectivement, l'organe d'entrée du différentiel associé aux roues avant et un organe lui-même relié à l'entrée du différentiel associé aux roues arrière, le différentiel central et le différentiel associé aux roues avant étant disposés coaxialement à peu près entre les deux roues avant, de sorte que ce différentiel central est traversé par l'un des arbres de transmission entraînés par le différentiel, caractérisé en ce que l'organe de sortie du groupe motopropulseur entraîne en rotation un corps creux à l'intérieur duquel est disposé le différentiel associé aux roues avant, ce corps creux étant agencé pour entraîner en rotation un organe d'entrée du différentiel central.

Suivant d'autres caractéristiques :

- dans une zone située entre le différentiel central et le différentiel associé aux roues avant, sont disposés concentriquement, de l'extérieur vers l'intérieur : une partie latérale du corps creux ; une partie des boîtiers des deux différentiels ; un tronçon d'arbre creux reliant une sortie du différentiel central à l'entrée du différentiel associé aux roues avant ; et un arbre de transmission reliant à l'une des roues avant une sortie du différentiel associé aux roues avant ;

- il est prévu un mécanisme de verrouillage du différentiel central, comprenant un manchon cannelé coulissant agencé pour rendre solidaire en rotation deux des organes d'entrée et/ou de sortie du différentiel central.

L'invention va être décrite plus en détail ci-dessous en se référant au dessin annexé donné uniquement à titre d'exemple et dont :

- la Fig. 1 est une vue en coupe de la partie essentielle du dispositif suivant l'invention, le différentiel associé aux roues arrière n'étant pas visible sur ce dessin ; et

- la Fig. 2 est une vue partielle en coupe d'une variante.

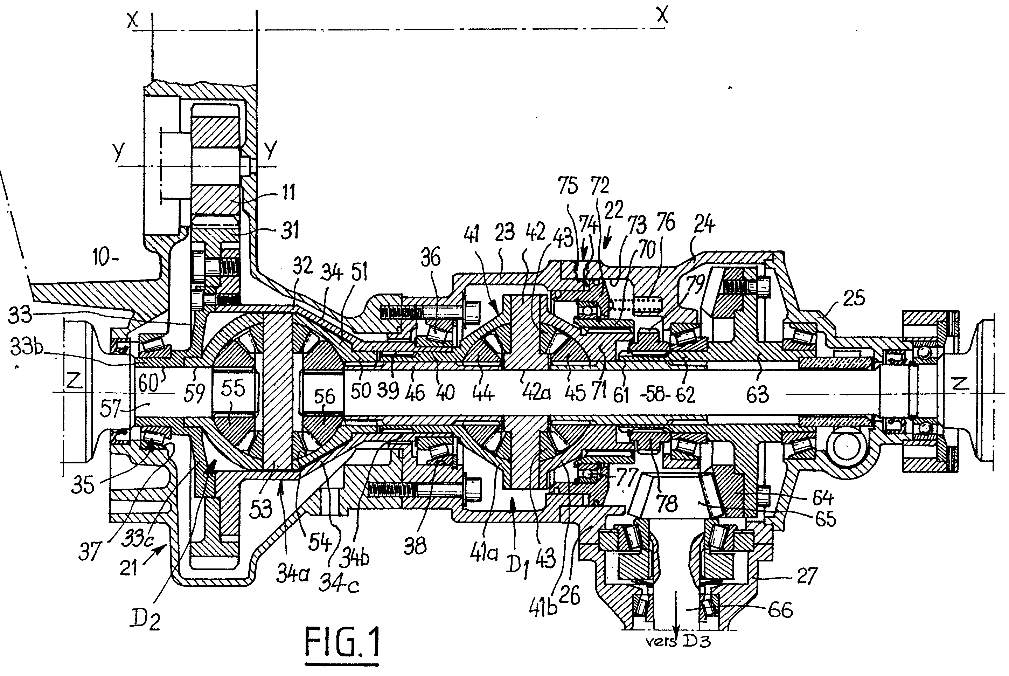

On voit, sur la Fig. 1, un axe X-X qui représente l'axe du vilebrequin d'un moteur à combustion interne (non représenté) disposé transversalement, c'est-à-dire perpendiculairement à la direction longitudinale du véhicule. Cet axe X-X constitue également l'axe de l'arbre primaire d'une boîte de vitesses dont seule une partie du carter 10 est représentée.

L'axe Y-Y constitue l'axe de l'arbre secondaire de cette boîte de vitesses dont un pignon 11 constitue l'organe de sortie.

Le dispositif suivant l'invention est logé en partie dans un carter 20 dont une partie 21 est venue de matière avec le carter de la boîte de vitesses, et en partie dans un carter 22 comportant deux parties principales 23 et 24, complétées par des éléments d'extrémité 25, 26 et 27.

Le pignon de sortie 11 de la boîte engrène avec une roue 31 à denture externe d'axe Z-Z parallèle aux axes X-X et Y-Y, fixée sur un corps creux 32 en deux parties 33, 34, qui est monté à rotation au voisinage de ses deux extrémités, par l'intermédiaire de deux roulements coniques 35 et 36, respectivement, en appui contre une portée 37

- 4 -

du carter 20 et une portée 38 du carter 23. Ce corps creux comporte une partie cylindrique 34a et deux parties d'extrémité 33b, 34b de diamètre plus faibles sur lesquelles sont reçues les bagues intérieures des roulements 35, 36 et qui sont raccordées à la partie cylindrique par un flasque 33c à peu près radical en ce qui concerne la partie de gauche sur le dessin et par une zone de liaison 34c de forme tronconique en ce qui concerne la partie de droite. A son extrémité de droite sur le dessin, ce corps creux est relié par des cannelures internes 39 à un prolongement tubulaire 40 du boîtier 41 d'un premier différentiel $D_1$ appelé "différentiel central" ou "différentiel interponts". Ce boîtier 41 est réalisé en deux parties 41a, 41b pour des raisons de montage, et comporte un croisillon 42 sur lequel sont montés fous des pignons satellites 43 engrenant avec deux pignons planétaires 44 et 45. Le premier planétaire 44 est solidaire en rotation d'un tronçon d'arbre creux 46 s'étendant à l'intérieur du prolongement creux 40 du boîtier 41, et dont l'autre extrémité est rendue solidaire en rotation par des cannelures d'un prolongement latéral 50 du boîtier 51 d'un deuxième différentiel $D_2$ que l'on appellera "différentiel avant" ou "différentiel associé aux roues avant" et qui est logé à l'intérieur du corps creux 32. Les deux différentiels $D_1$ et $D_2$ sont centrés sur le même axe Z-Z.

Le boîtier 51 constitue l'organe d'entrée de ce deuxième différentiel qui comporte également un axe ou un croisillon 53 sur lequel sont montés rotatifs des pignons satellites 54 qui sont en prise avec deux pignons planétaires 55 et 56 eux-mêmes solidaires en rotation de deux tronçons d'arbre 57 et 58 reliés respectivement aux roues avant gauche et droite. Le tronçon d'arbre 57 s'étend dans des alésages 59, 60 du boîtier 51 et du corps creux 32, tandis que le deuxième tronçon d'arbre 58 s'étend à travers le tronçon d'arbre creux 46, un alésage 42a du croisillon 42 du différentiel central $D_1$ et à travers un arbre creux 61 qui réalise la liaison en rotation entre le deuxième planétaire 45 du différentiel central $D_1$ et un prolongement tubulaire 62 d'un flasque 63 sur lequel est fixé un pignon de renvoi conique 64. Ce pignon 64 est lui-même en prise avec un deuxième pignon 65 relié à un tronçon d'arbre 66 destiné à assurer la liaison avec le troisième différentiel (non représenté) qui assure l'entraînement des roues arrière du véhicule.

Le dispositif est complété par un mécanisme permettant de verrouiller ou de bloquer le différentiel central $D_2$, de façon à pouvoir entraîner dans les mêmes conditions les deux différentiels avant et arrière. Ce mécanisme comprend un manchon 70 à cannelures internes pouvant coulisser sur des cannelures externes prévues sur un prolongement latéral 71 du boîtier 41b du différentiel central. Ce manchon coulissant peut être entraîné en translation par un piston annulaire 72 monté coulissant à joint étanche dans un logement cylindrique 73 du carter 24 et délimitant avec cette paroi cylindrique une chambre 74 susceptible d'être alimentée par un conduit 75 à partir du circuit d'huile de lubrification du moteur. Au moins un ressort 76 assure le rappel du piston 72 et du manchon 70 dans la position de non verrouillage du différentiel central. Un roulement 77 est interposé entre le manchon 71 et le piston 72.

Ce mécanisme de verrouillage comprend également une roue dentée 78 calée sur l'extrémité du prolongement tubulaire 62 et comportant à sa périphérie une denture externe 79 sur laquelle le manchon 70 peut venir s'engager.

Le dispositif est complété par un certain nombre d'organes classiques, tels que roulements, organes d'étanchéité, organes de fixation, etc. qui ne seront pas décrits ici en détail. De même, n'ont pas été représentés les joints homocinétiques au moyen desquels les roues sont entraînées.

Le fonctionnement du dispositif que l'on vient de décrire est le suivant : en fonctionnement normal l'organe de sortie 11 de la boîte de vitesses entraîne la roue dentée 31 et le corps creux 32 qui, lui-même, entraîne en rotation l'organe d'entrée 41 du différentiel central $D_1$. Les deux planétaires 44 et 45 de ce différentiel central sont reliés respectivement aux organes d'entrée des différentiels des roues avant et des roues arrière.

En particulier, le différentiel $D_2$ associé aux roues avant est attaqué par son boîtier 51 et il entraîne les deux roues avant par l'intermédiaire des deux tronçons d'arbre 57 et 58, alors que dans l'état de la technique analysé dans le préambule de la présente demande, ces roues étaient entraînées à partir de deux différentiels différents.

Il est à noter que pour pouvoir obtenir ce résultat, il faut que l'arbre de transmission 58 de la roue avant droite traverse le différentiel central et que ce différentiel central soit attaqué à partir de la boîte de vitesses par l'intermédiaire du corps creux 32 à l'intérieur duquel se trouve le différentiel $D_2$ associé aux roues avant.

Si une perte d'adhérence se produit sur une roue ou sur un essieu, il est possible de verrouiller le différentiel central $D_1$ au moyen du mécanisme prévu à cet effet et déjà décrit ci-dessus. Pour ce faire, il suffit d'alimenter la chambre 74 en huile provenant du moteur, au moyen d'une commande convenable non représentée au dessin mais dont la réalisation est à la portée de l'homme de l'art, pour repousser le piston 72 et par conséquent le manchon cannelé 70 vers la droite en considérant le dessin. Ce manchon vient alors en prise sur la roue dentée 78, et rend solidaire en rotation l'ensemble du différentiel central, de sorte que les deux différentiels associés au train avant et au train arrière sont entraînés.

Il résulte de ce qui précède que le dispositif de transmission proposé est particulièrement compact, puisque les deux différentiels, le différentiel central $D_1$ et le différentiel $D_2$ associés aux roues avant, ainsi que les organes qui leur sont associés, s'intègrent parfaitement à l'ensemble du groupe motopropulseur transversal. De plus :

- on conserve les pièces d'origine, au moins en ce qui concerne le groupe motopropulseur et le carter 21 du différentiel $D_1$, seul l'ensemble constitué par les carters 23, 24 étant rajouté, de même bien entendu que la transmission en direction du différentiel $D_3$ associé aux roues arrières et ce différentiel lui-même ;

- chacune des deux roues de chaque train est entraînée à partir du même différentiel ce qui garantit une bonne symétrie dans la transmission de la puissance ;

- la disposition des roulements 35 et 36 est particulièrement favorable à un bon équilibrage du corps creux 32 qui intervient dans la transmission de puissance ;

- ce dispositif est muni de moyens simples pour assurer le verrouillage du différentiel central ;

- il a un encombrement très faible.

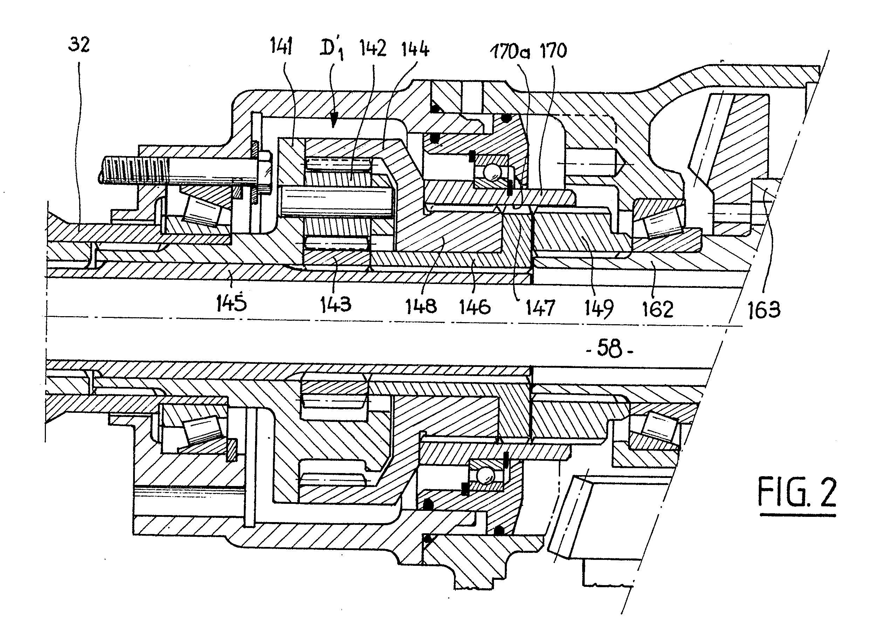

Dans la variante de la Fig. 2, le différentiel central $D'_1$ est du type à train épicycloïdal, pour pouvoir réaliser une répartition de puissance inégale, par exemple 1/3-2/3, entre le train avant et le train arrière.

- 8 -

Ce différentiel comprend un porte-satellite 141 qui constitue son organe d'entrée, relié au corps creux 32 et dont les satellites 142 engrènent avec un planétaire 143 et une couronne 144. Le planétaire 143 constitue l'organe de sortie calé sur un tronçon d'arbre creux 145, lui-même solidaire en rotation de l'organe d'entrée du différentiel $D_2$. La couronne 144 constitue le deuxième organe de sortie, destiné à entraîner le troisième différentiel $D_3$.

Le tronçon d'arbre creux 145 se prolonge vers la droite en considérant le dessin et porte un manchon 146, solidaire en rotation de l'arbre 145 et qui porte une collerette 147 à cannelure externes.

La couronne 144 est prolongée par une partie 148 cannelée extérieurement, en prise avec le manchon 170 du dispositif de verrouillage. Dans le prolongement de la partie 148 est prévu un manchon 149, cannelé intérieurement et extérieurement en prise par ses cannelures internes avec le prolongement latéral 162 du flasque 163, et dont les cannelures externes sont en prise avec le manchon 170. Ce dernier, comporte une partie intermédiaire 170a,, non cannelée, qui, en position de fonctionnement normal, se trouve en face de la collerette 147.

Les cannelures des pièces 148, 149 et 147 sont identiques.

En fonctionnement normal la puissance est donc transmise à partir du différentiel central $D'_1$ vers les différentiels $D_2$ et $D_3$, par les organes de sortie que constituent le planétaire 143 et la couronne 144.

Pour verrouiller le différentiel $D_1$, le manchon 170 est déplacé vers la droite, ce qui amène le manchon 170 en prise avec la collerette 147, bloquant ainsi en rotation le planétaire 143 et la couronne 144.

En dehors de la répartition différente de puissance, ce mode de réalisation offre les mêmes avantages que le précédent.

Bien entendu, l'agencement selon l'invention peut être utilisé avec un groupe motopropulseur transversal disposé à l'arrière, les rôles des roues avant et arrière étant alors intervertis par rapport à ce qui a été décrit dans ce mémoire.

- 10 -

REVENDICATIONS

1. Dispositif de transmission pour véhicule à groupe motopropulseur transversal et à quatre roues motrices, comprenant trois différentiels ($D_1$ ou $D'_1$, $D_2$, $D_3$) : un différentiel central ($D_1$, $D'_1$), un différentiel ($D_2$) associé aux roues avant et un différentiel ($D_3$) associé aux roues arrière ; le différentiel central ($D_1$ ; $D'_1$) ayant un organe d'entrée (41 ; 141) entraîné par l'arbre de sortie du groupe motopropulseur et deux organes de sortie (44, 45 ; 143, 144) agencés pour entraîner, respectivement, l'organe d'entrée (51) du différentiel ($D_2$) associé aux roues avant et un organe (63 ; 163) lui-même relié à l'entrée du différentiel ($D_3$) associé aux roues arrière, le différentiel central ($D_1$ ; $D'_1$) et le différentiel ($D_2$) associé aux roues avant étant disposés coaxialement à peu près entre les deux roues avant, de sorte que ce différentiel central est traversé par l'un des arbres de transmission entraînés par le différentiel ($D_2$), caractérisé en ce que l'organe de sortie (11) du groupe motopropulseur entraîne en rotation un corps creux (32) à l'intérieur duquel est disposé le différentiel ($D_2$) associé aux roues avant, ce corps creux (32) étant agencé pour entraîner en rotation un organe d'entrée (41 ; 41') du différentiel central ($D_1$ ; $D'_1$).

2. Dispositif suivant la revendication 1, caractérisé en ce que le corps creux (32) est supporté par deux roulements (35, 36) disposés, respectivement à ses deux extrémités opposées et reçus l'un (35) dans un carter (21) adjacent au carter (10) du groupe motopropulseur et l'autre (36) dans un carter (23) du différentiel central ($D_1$).

3. Dispositif suivant l'une quelconque des revendications 1 et 2, caractérisé en ce que dans une zone située entre le différentiel central ($D_1$ ; $D'_1$) et le différentiel ($D_2$) associé aux roues avant, sont disposés concentriquement, de l'extérieur vers l'intérieur : une

- 11 -

partie latérale (34b) du corps (32) ; une partie (40 ; 50) des organes d'entrée (41, 51 ; 141) des deux différentiels $(D_1 ; D_2)$ ; un tronçon d'arbre creux (46 ; 145) reliant une sortie (44 ; 143) du différentiel central $(D_1 ; D'_1)$ à l'entrée (50, 51) du différentiel $(D_2)$ associé aux roues avant ; et un arbre de transmission (58) reliant à l'une des roues avant une sortie (56) du différentiel $(D_2)$ associé aux roues avant.

4. Dispositif suivant l'une quelconque des revendications 1 à 3, caractérisé en ce que le boîtier (41) constitue l'organe d'entrée du différentiel central $(D_1)$, tandis que ses organes de sortie sont constitués par ses deux planétaires (44, 45), et il en est de même pour le différentiel $(D_2)$ associé aux roues avant.

5. Dispositif suivant la revendication 4, caractérisé en ce que le boîtier (41) du différentiel central $(D_1)$ est réalisé en deux parties (41a, 41b) disposées de part et d'autre d'un plan perpendiculaire à l'axe Z-Z de l'essieu avant et entre lesquelles est disposé un croisillon (42) sur lequel sont tourillonnés les satellites (43), ce croisillon (42) comportant un alésage (42a) pour le passage de l'arbre de transmission (58) vers l'une des roues avant.

6. Dispositif suivant l'une quelconque des revendications 1 à 3, caractérisé en ce que le différentiel central $(D'_1)$ est du type à train épicycloïdal dont le porte-satellites (141) constitue l'organe d'entrée et le planétaire (143) et la couronne (144) les organes de sortie.

7. Dispositif suivant l'une quelconque des revendications 1 à 6, caractérisé en ce qu'il comprend un mécanisme de verrouillage du différentiel central $(D_1 ; D'_1)$, comprenant un manchon cannelé coulissant (70 ; 170) agencé pour rendre solidaire en rotation deux des organes d'entrée et/ou de sortie du différentiel central.

8. Dispositif suivant la revendication 7, caractérisé en ce que ledit manchon (70) est monté coulissant sur une partie cannelée (71) du boîtier (41) et peut venir en prise avec une roue dentée (78) elle-même solidaire en rotation d'un organe (63) entraîné par le deuxième organe de sortie (45) du différentiel central ($D_1$).

9. Dispositif suivant la revendication 7, caractérisé en ce que ledit manchon (170) est monté coulissant sur une partie cannelée (148) de la couronne (144) et sur une partie cannelée (149) reliée à un organe (163) de transmission vers le troisième différentiel ($D_3$), ce manchon comportant une partie intermédiaire non cannelée situé en face d'une collerette cannelée (147) solidaire en rotation du planétaire (143).

10. Dispositif suivant l'une quelconque des revendications 7 à 9, caractérisé en ce que le manchon (70 ; 170) est entraîné en coulissement, à l'encontre d'un ressort de rappel (76), par un piston annulaire (72) reçu dans un logement cylindrique (73) du carter (22) du différentiel central ($D_1$ ; $D'_1$).

11. Dispositif suivant la revendication 10, caractérisé en ce qu'un roulement (77) est interposé entre le manchon (70 ; 170) et le piston annulaire (72).

FIG.1

X — X

Y — Y

11
31
10-
32 34 51
36
41 23 42 43 75 72 74 22 73 76 24
70
79
25
33
33b
N
60 59 55 56 50 39 46 40 44 42a 45 71 61 -58- 62 63 N
57
35
53
37 33c
21
54 34b
34a 34c
38
41a D1 43
77
78
64
65
27
66
41b 26
D2
vers D3

1/2

0159925

0159925

FIG.2

# RAPPORT DE RECHERCHE EUROPEENNE

Office européen
des brevets

EP 85 40 0441

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | PATENTS ABSTRACTS OF JAPAN, vol. 7, no. 157 (M-227)[1302], 9 juillet 1983; & JP - A - 58 63 523 (NISSAN JIDOSHA K.K.) 15-04-1983 * Abrégé * | 1,3 | B 60 K 17/34 |
| X | PATENTS ABSTRACTS OF JAPAN, vol. 7, no. 157 (M-227)[1302], 9 juillet 1983; & JP - A - 58 63 525 (NISSAN JIDOSHA K.K.) 15-04-1983 * Abrégé * | 1,6 | |
| X | GB-A-2 074 516 (NISSAN) * Figures 1A-4B; page 2, lignes 18-130; page 3 - page 9, ligne 50 * | 1,6 | |
| X | GB-A-2 074 517 (NISSAN) * Figures 1A-6B; page 2, lignes 49-129; page 3 - page 13, ligne 106 * | 1 | DOMAINES TECHNIQUES RECHERCHES (Int. Cl.4) B 60 K 17/34 |
| A | FR-A-2 480 204 (NISSAN) * Figues 1A-2B; page 2, lignes 35-37; pages 4-27 * | 1 | |
| D,A | EP-A-0 094 870 (CABINET LAVOIX) * Figures 1-3; page 3, lignes 20-34; pages 4-9 * | 1 | |

Le présent rapport de recherche a été établi pour toutes les revendications

| Lieu de la recherche | Date d'achèvement de la recherche | Examinateur |
|---|---|---|
| LA HAYE | 04-06-1985 | VANNESTE M.A.R. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03.82